Europäisches Patentamt

European Patent Office

Office européen des brevets

(11) Publication number: **0 315 600**
A2

# (12) EUROPEAN PATENT APPLICATION

(21) Application number: 88830459.9

(22) Date of filing: 28.10.88

(51) Int. Cl.⁴: **B 28 B 13/00**
**B 65 G 47/91**

(30) Priority: 02.11.87 IT 6792387

(43) Date of publication of application:
**10.05.89 Bulletin 89/19**

(84) Designated Contracting States:
**AT BE CH DE ES FR GB GR IT LI LU NL SE**

(71) Applicant: **Lapiccirella, Raffaele**
**Via Rivoli 122**
**I-10090 Villarbasse Torino (IT)**

(72) Inventor: **Lapiccirella, Raffaele**
**Via Rivoli 122**
**I-10090 Villarbasse Torino (IT)**

(74) Representative: **Jacobacci, Filippo et al**
**c/o JACOBACCI-CASETTA & PERANI S.n.c. Via Alfieri, 17**
**I-10121 Torino (IT)**

(54) Absestos cement slabs handling device.

(57) Board-moving equipment associated with a plant for the production of asbestos-cement products has a suction lifting plate (32) located above a conveyor belt (N) and moved vertically and horizontally by means of pressurised-fluid actuators. In order to ensure the correct pick up of boards (L) from the moving belt (N), the equipment includes a pair of abutment elements (54) which the suction plate (32) abuts frontally during the pick-up phase, the elements (54) being fixed to chains (44) arranged beside the conveyor belt (N) and passing over two pairs of toothed pinions, one of the pairs being mounted, with the interposition of an idler-wheel mechanism, coaxially with a roller over which the conveyor belt (N) passes.

FIG. 1

EP 0 315 600 A2

**Description**

## Equipment for moving asbestos-cement boards

The present invention relates to equipment for moving boards, particularly of asbestos cement or like materials and provided with a belt conveyor.

In plants used for the production of asbestos-cement products, where the term "asbestos cement" relates to all sheet materials constituted by a mixture of cement and water and a reinforcing material constituted by fibres or, more recently, by netting of plastics material, it is necessary to move the cut boards, which are still in the plastic state, from the conveyor belt to the machine for forming the products.

The object of the present invention is to provide equipment which enables the boards to be picked up without interrupting the operation of the conveyor belt, the equipment being at the same time both simple and economical to produce.

This object is achieved by virtue of the fact that the equipment includes a portal structure situated in correspondence with the conveyor; a pick-up member supported by the portal structure and slidable vertically until it comes into contact with the belt, and horizontally parallel to the direction of the belt; first and second drive means interposed between the pick-up member and the portal structure and arranged to drive the vertical and horizontal movements respectively of the pick-up member; an abutment device associated with the conveyor and provided with at least one abutment element which can move horizontally at the same speed as the belt, the abutment element cooperating with the pick-up member during the activation of the second drive means to keep the pick-up member moving at the same speed as the belt.

By virtue of these characteristics, the contact between the pick-up member, which may to advantage be a suction plate, and the boards moving on the conveyor is achieved without relative slippage between the suction plate and the boards and hence without the need to interrupt the advance of the conveyor belt.

The second drive means preferably comprise a pressurised-fluid cylinder, and the abutment device preferably comprises at least one chain carrying the abutment element and arranged beside the belt, the chain passing over first and second toothed pinions, the first toothed pinion being mounted, with the interposition of an idler-wheel mechanism, coaxially with a roller over which the belt passes; an actuator being associated with the second pinion and adapted to return the abutment member to a starting position of its cycle.

Further characteristics and advantages of the equipment according to the invention will become clear from the detailed description which follows with reference to the appended drawings, provided by way of non-limiting example, in which

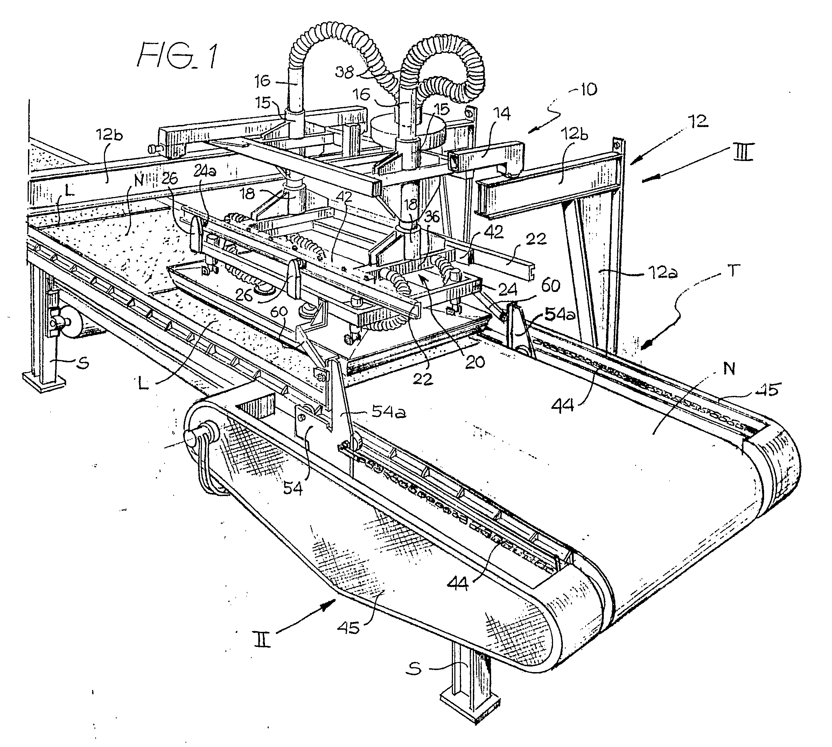

Figure 1 is an overall perspective view of equipment according to the invention,

Figure 2 is a detail of Figure 1 on an enlarged scale,

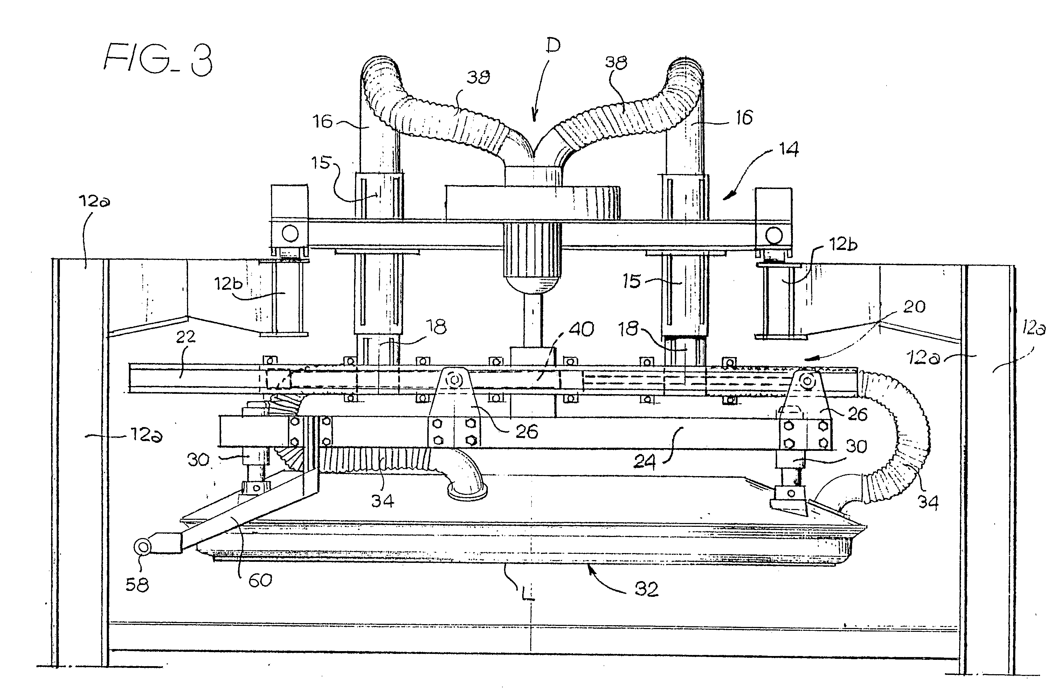

Figure 3 is a side view taken on the arrow III of Figure 1, and

Figures 4-6 show schematically the operating cycle of the equipment.

With reference to the drawings, reference 10 generally indicates equipment for lifting and moving boards L of asbestos cement, situated above a conveyor T provided with a belt N which passes over rollers R.

A portal structure 12 is situated in correspondence with the conveyor T and includes vertical pillars 12a and horizontal cross-members 12b on which a motor-driven trolley 14 runs. The latter has a pair of vertical tubular guides 15 in which two rods 16 are slidable, the lower ends of the rods being fixed at 18 to an auxiliary rectangular structure 20 carrying lateral channel-section guides 22.

Rollers 24a of a frame 24, which is situated below the auxiliary structure 20, are rotatable in the guides 22, the rollers 24a being connected to the frame 24 by means of vertical arms 26. A suction plate 32 is suspended beneath the frame 24 with the interposition of shock-absorber elements 30 and is connected by means of flexible tubes 34 to two manifolds 36 located in correspondence with the guides 18 of the auxiliary structure 20. The manifolds 36 communicate with a vacuum supply D through the hollow vertical rods 16 and flexible tubes 38.

Pressurised-fluid actuators (not illustrated) are interposed between the trolley 14 and the auxiliary structure 20 for driving the vertical movement of the suction plate 32. The horizontal sliding of the frame 24 is driven by means of a pair of pressurised-fluid cylinders 40 arranged within box-structures 42 interposed between the auxiliary structure 20 and the horizontal guides 22.

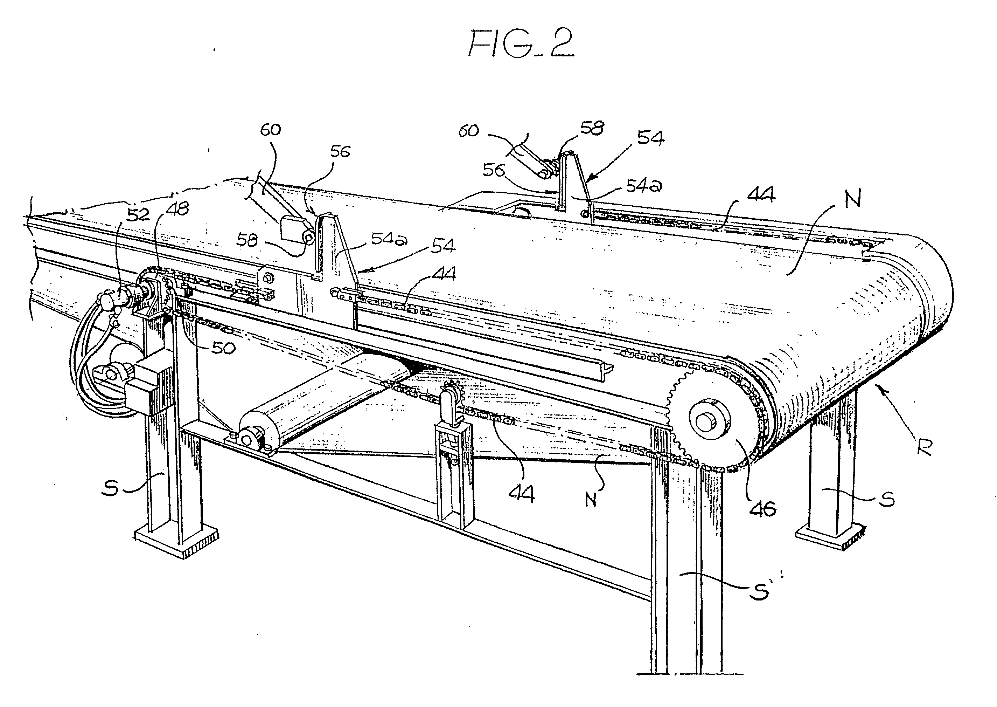

A pair of chains 44 protected by covering elements 45 are situated in correspondence with one end of the conveyor T, downstream of the portal structure 12. Each chain 44 passes over a respective first toothed pinion 46 mounted coaxially with the end roller R over which the belt N passes, and over a respective second toothed pinion 48 rotatable on the structure S of the conveyor T. An idler-wheel mechanism (not illustrated) is interposed between the first pinions 46 and the roller R and prevents the over-running (indicated by an arrow F in Figure 2) of the first pinions 46 relative to the roller R. The second pinions 48 are interconnected by a shaft 50 and are rotated, with the interposition of a clutch, by a hydraulic motor 52 whose function will be explained in the description below.

Shaped abutment elements 54 are fixed to the chain 44 and each includes a vertical portion 54a defining an abutment surface 56 adapted to cooperate, with the interposition of rollers 58, with inclined appendages 60 fixed to the sides of the frame 24 which supports the suction plate 32.

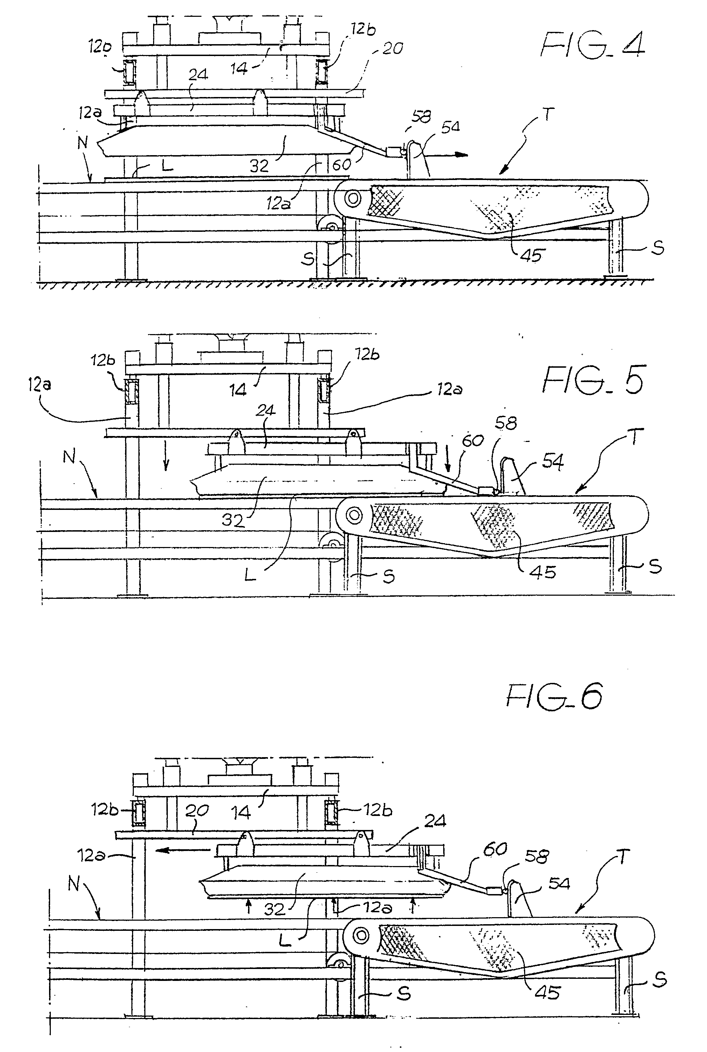

During the operation of the equipment 10, the belt N advances the boards L continuously. In a starting position of the cycle (Figure 4) the trolley 14 is above the conveyor T and the suction plate 32 connected thereto is in a raised position. Subsequently, on a command from a central unit (not illustrated) which is arranged to coordinate the operation of the equipment 10 in synchronism with the conveyor T, the auxiliary structure 20 is lowered and the pressurised-fluid cylinders 40 are operated simultaneously and, the appendages 60 of the frame 24 being in abutment with the abutment elements 54, they drive the suction plate 32 in the direction of advance of the belt N at a speed which is identical to that of the belt N, by virtue of the presence of the idler wheel mechanism interposed between the first toothed pinions 46 and the roller R over which the belt N passes. The suction plate 32 thus contacts the board L without any relative slippage (Figure 5).

After a predetermined time, the suction plate 32 which, by virtue of the shock-absorbers 30 was bearing with its own weight on the belt N, is raised with the board L adhering to it and, by virtue of the double-acting pressurised-fluid cylinders 40, is returned to its initial position beneath the auxiliary structure 20. The trolley 14 moves the board L, supported by the suction plate 32, transverse the conveyor T towards the utiliser. At the same time as the suction plate 32 returns in the direction opposite the advance of the belt N, or after this movement, the operation of the hydraulic motor 52 returns the abutment elements 54 to their starting positions so that, when the trolley 14 has returned to its position above the conveyor T, another pick-up cycle for a board L, identical to the cycle described above, can begin.

For example, when the boards L are contiguous on the belt N, it is possible to provide two or more sets of equipment in series with each other and operating according to the same principle.

## Claims

1. Equipment for moving boards, particularly of asbestos cement or like material, provided with a belt conveyor, characterised in that it comprises
- a portal structure (12) situated in correspondence with the conveyor (T),
- a pick-up member (32, 30, 14) supported by the portal structure (12) and slidable vertically until it comes into contact with the belt (N) and horizontally parallel to the direction of belt (N),
- first and second drive means (40) interposed between the pick-up member (32, 24) and the portal structure (12) and arranged to drive the vertical movement and the horizontal movement respectively, of the pick-up member (32),
- an abutment device (44, 46, 48) associated with the belt conveyor (T), and provided with at least one abutment element (54, 54a) which can move horizontally at the same speed as the belt (N), the abutment element (54, 54a) cooperating with the pick-up member (24, 30, 60, 58) during the activation of the second drive means (40) to keep the pick-up member (32) moving at the same speed as the belt (N).

2. Equipment according to Claim 1, characterised in that the second drive means comprise at least one pressurised-fluid cylinder (40) and in that the abutment device includes
- at least one chain (44) carrying the abutment element (54) and situated beside the belt (N), the chain passing over a first toothed pinion (46) and a second toothed pinion (48), the first toothed pinion (46) being mounted, with the interposition of an idler wheel mechanism, coaxially with a roller (R) over which the belt (N) passes,
- an actuator (52) associated with the second pinion (48) and arranged to return the abutment element (54, 54a) to an initial starting position of its cycle.

3. Equipment according to Claim 1, characterised in that the pick-up member comprises
- a trolley (14) supported by the portal structure (12) for movement transverse the belt (N) of the conveyor (T) from a board (L) pick-up position above the belt (N) to a board (L) release position,
- a flat auxiliary structure (20) supported by the trolley (14) by means of vertical guides (15) and slidable vertically relative to the trolley (14),
- a pair of horizontal guides (22) fixed to the auxiliary structure (20) parallel to the direction of the belt (N),
- a lifting plate (32) with an associated suction device (D, 38, 16, 34) supported by the flat auxiliary structure (20) for sliding in the horizontal guides (22), and
- at least one pressurised-fluid cylinder (40) interposed between the auxiliary structure (20) and the lifting plate (32) for driving the horizontal sliding of the lifting plate (32).

4. Equipment according to Claim 2, characterised in that abutment device includes a pair of chains (44) situated facing each other on opposite sides of the belt (N) of the conveyor (T), and each having a respective abutment element (54, 54a).

5. Equipment according to Claim 3 or Claim 4, characterised in that the lifting plate (23) is suspended below an auxiliary frame (24) which can slide in the horizontal guides (22) of the flat structure (20), the auxiliary frame (24) having lateral appendages (58, 60) which are adapted to abut the abutment elements (54a, 54).

FIG_1

FIG_2

EP 0 315 600 A2

FIG. 3

FIG_4

FIG_5

FIG_6